# EUROPÄISCHE PATENTANMELDUNG

(11) **EP 3 301 316 A1**
(43) Veröffentlichungstag der Anmeldung: **04.04.2018**
(21) Anmeldenummer: 16191411.4
(22) Anmeldetag: 29.09.2016
(51) Int. Cl.: F16C 35/073, F16D 1/08

(54) **ROTATIONSVERBINDUNG, SPANNHÜLSE FÜR ROTATIONSVERBINDUNG UND VERFAHREN ZUM HERSTELLEN EINER ROTATIONSVERBINDUNG**

(71) Anmelder: Fischer Engineering Solutions AG, 3360 Herzogenbuchsee (CH)
(72) Erfinder: Stieger, Werner, 4702 Oensingen (CH); Boller, Rolf, 4450 Sissach (CH); Hager, Simon, 3012 Bern (CH)
(74) Vertreter: Hepp Wenger Ryffel AG

(57) **Zusammenfassung**

Die Erfindung betrifft eine Rotationsverbindung (10) zwischen miteinander rotierbaren Teilen (11, 12), enthaltend eine Welle (11), einen Rotor (12), mindestens eine in radialer Richtung zwischen der Welle (11) und dem Rotor (12) eingespannte Spannhülse (13; 13'; 13") zum Übertragen von Drehmomenten zwischen der Welle (11) und dem Rotor (12), insbesondere von der Welle (11) auf den Rotor (12). Die Spannhülse (13; 13'; 13") lässt bei Rotation in zumindest einem Drehzahlbereich in wenigstens einer, bevorzugt in jeder zu einer Rotationsachse (R) der Welle (11) und des Rotors (12) senkrechten Schnittebene einen radialen Spalt (16) zwischen Welle (11) und Rotor (12) frei. Weiterhin betrifft die Erfindung eine Spannhülse (13; 13'; 13") für eine solche Rotationsverbindung (10) sowie ein Verfahren zum Herstellen einer solchen Rotationsverbindung.

## Beschreibung

Die vorliegende Erfindung betrifft eine Rotationsverbindung zwischen miteinander rotierbaren Teilen, eine Spannhülse für eine Rotationsverbindung und ein Verfahren zum Herstellen einer Rotationsverbindung.

Gattungsgemässe Rotationsverbindungen zwischen einer Welle und einem Rotor werden beispielsweise in elektrischen Maschinen oder in Verdichtern oder Turbinen verwendet, wobei der Rotor durch beispielsweise ein Verdichter- oder Turbinenrad gebildet ist. Die Welle kann beispielsweise unmittelbar mit dem Rotor verbunden werden, wofür im Stand der Technik etwa eine Pressverbindung eingesetzt wird. Weiterhin ist es bekannt, zwischen den genannten Bauteilen eine Hülse vorzusehen. In der DE 28 34 834 A1 sind beispielsweise elektrische Maschinen mit einer in zwei Lagern gelagerten Läuferwelle offenbart. In einem Ausführungsbeispiel ist eine Dämpfungshülse vorgesehen, die in radialer Richtung zwischen einem Wellenende und einem Innenring eines Kugellagers angeordnet ist und die als schwingungsdämpfende Elemente dient.

Vor allem in äusserst schnell rotierenden Systemen besteht häufig das Problem, dass im Betrieb aufgrund von Fliehkräften zwischen Welle und Rotor keine ausreichenden Radialkräfte mehr bestehen, um die erforderlichen Drehmomente übertragen zu können, oder dass Welle und Rotor sogar ganz ausser Kontakt geraten. Dies wird gelegentlich als "Abheben" bezeichnet. Auch bei hohen Temperaturbeanspruchungen kann ein derartiges Abheben auftreten, beispielsweise wenn Welle und Rotor verschiedenen Temperaturen ausgesetzt sind und/oder verschiedene Wärmeausdehnungskoeffizienten aufweisen. Um das Abheben zu vermeiden, muss oftmals auf bestimmte Kombination von Materialien der Welle und des Rotors verzichtet werden, die aus anderen Gründen vorteilhaft wären. Von besonderer Relevanz ist bei hohen Drehzahlen auch eine möglichst exakte Zentrierung des Rotors und der Welle relativ zueinander, sodass Unwuchten vermieden werden können.

Es ist daher eine Aufgabe der vorliegenden Erfindung, eine Rotationsverbindung zwischen zwei miteinander rotierenden Teilen bereitzustellen, die die oben genannten Nachteile nicht aufweist. Insbesondere soll also das Abheben verhindert werden, und zwar selbst wenn hohe Drehzahlen und/oder Temperaturen und/oder Temperaturunterschiede zwischen Welle und Rotor herrschen. Ausserdem sollen Kombinationen der Materialien von Welle und Rotor und auch Temperaturbereiche zugänglich gemacht werden, die mit einer reinen Pressverbindung und auch mit einer zusätzlichen Sicherung mit Hilfe von Gewinden nicht möglich wären. Weiterhin soll eine möglichst exakte Zentrierung zur Vermeidung von Unwuchten ermöglicht werden. Auch die Montage im Serienprozess soll möglichst vereinfacht werden.

In einem ersten Aspekt der Erfindung wird diese Aufgabe gelöst durch eine Rotationsverbindung zwischen miteinander rotierbaren Teilen, die eine Welle, einen Rotor und mindestens eine Spannhülse enthält. Als Rotor wird hier und im Folgenden jegliches um eine Rotationsachse rotierbare Bauteil angesehen; der Begriff ist also nicht beschränkt auf einen von einem Motor angetriebenen Rotor. Die Spannhülse ist in radialer Richtung zwischen der Welle und dem Rotor eingespannt und zum Übertragen von Drehmomenten zwischen der Welle und dem Rotor ausgebildet. Dabei können sich in zumindest einem axialen Bereich die Welle innerhalb der Spannhülse und der Rotor ausserhalb der Spannhülse befinden. Alternativ können sich in zumindest einem axialen Bereich der Rotor innerhalb der Spannhülse befinden und die Welle ausserhalb der Spannhülse. Insbesondere kann die Spannhülse zum Übertragen von Drehmomenten von der Welle auf den Rotor ausgebildet sein. Alternativ ist es natürlich auch möglich, dass mit Hilfe der Spannhülse Drehmomente vom Rotor auf die Welle übertragen werden, oder dass in verschiedenen Betriebszuständen wahlweise Drehmomente von der Welle auf den Rotor oder vom Rotor auf die Welle übertragen werden.

Erfindungsgemäss lässt die Spannhülse zumindest bei Rotation in zumindest einem Drehzahlbereich in wenigstens einer, bevorzugt in jeder zu einer Rotationsachse der Welle und des Rotors senkrechten Schnittebene einen radialen Spalt zwischen Welle und Rotor frei. Ein solcher radialer Spalt kann auch beim Stillstand freigelassen sein. Es liegt aber ebenso im Rahmen der Erfindung, dass beim Stillstand oder bei geringen Drehzahlen kein solcher radialer Spalt freigelassen wird, sofern in zumindest einem Drehzahlbereich ein solcher radialer Spalt freigelassen wird. Der genannte Drehzahlbereich kann beispielsweise ein Bereich von 10'000 U/min bis 1'000'000 U/min, bevorzugt von 50'000 U/min bis 600'000 U/min, besonders bevorzugt von 80'000 U/min bis 400'000 U/min sein.

Das genannte Ausbleiben eines radialen Spaltes im Stillstand kann beispielsweise dann auftreten, wenn Welle, Spannhülse und Rotor in einer Presspassung hergestellt wurden. So können etwa Welle, Spannhülse und Rotor bei der Herstellung unterschiedlich geschrumpft werden. Beispielsweise kann sich der Rotor beim Schrumpfen stärker zusammenziehen als die Spannhülse. Die Presspassung kann durch eine plastische Verformung oder durch Lastzyklen hervorgerufen werden.

Der genannte radiale Spalt kann dabei in einzelnen axialen Abschnitten der Spannhülse zwischen Welle und Spannhülse und/oder zwischen Spannhülse und Rotor und/oder zwischen radialen Abschnitten der Spannhülse vorliegen.

Aufgrund der erfindungsgemässen Ausbildung der Spannhülse kann das Abheben selbst unter vergleichsweise hohen Drehzahl- und Temperaturbeanspruchungen wirkungsvoll verhindert werden, so dass auch unter diesen Bedingungen zuverlässig Drehmomente übertragen werden können. Ein Abheben wird nämlich dadurch verhindert, dass sich die Spannhülse verformen kann, wobei sich die Breite des zwischen Welle und Rotor gebildeten radialen Spaltes in Abhängigkeit von Temperatur und Fliehkraft ändern kann. Somit können elastische Verformungen von Welle und/oder Rotor kompensiert werden, und die Radialkräfte zwischen Welle und Rotor sind ausreichend, um Drehmomente zwischen Welle und Rotor übertragen zu können. Weiterhin sind gewisse Kombinationen von Materialien des Rotors und der Welle möglich, die sich mit einer reinen Pressverbindung nicht erreichen liessen. Dies erweitert die Möglichkeiten für den Einsatz neuer Materialkombinationen erheblich. Zudem kann durch die erfindungsgemässe Spannhülse eine federnde Verbindung zwischen Welle und Rotor erreicht werden, was der Reduktion von Spannungen in den Bauteilen dienen kann.

Abgesehen von der Form unterscheidet sich die erfindungsgemässe Spannhülse von der Dämpfungshülse der oben genannten DE 28 34 834 A1 auch dadurch, dass sie eine präzise Verbindung ermöglicht, sodass insbesondere eine exakte Zentrierung zwischen Welle und Rotor ermöglicht wird. Zudem ist die erfindungsgemässe Spannhülse zur Übertragung weitaus höherer Drehmomente geeignet als die Dämpfungshülse der DE 28 34 834 A1. Auch die erfindungsgemässe Spannhülse kann als sekundäre Funktion eine gewisse Dämpfung aufweisen, die sich durch eine entsprechende Geometrie- und Materialwahl ergeben kann.

Bevorzugt weist die Spannhülse mindestens einen ersten axialen Abschnitt und mindestens einen zweiten axialen Abschnitt auf, wobei sie im ersten axialen Abschnitt nur an der Welle anliegt, nicht aber auch am Rotor, und im zweiten axialen Abschnitt nur am Rotor anliegt, nicht aber auch an der Welle. Dieser Aufbau ist zum einen recht einfach und erlaubt zum anderen eine vorteilhafte Einstellung der Breite des radialen Spaltes, sodass die minimale zum Übertragen von Drehmomenten erforderliche Radialkraft in einem möglichst hohen Drehzahlbereich garantiert werden kann. Alternativ sind auch Ausführungsformen denkbar und von der Erfindung erfasst, bei denen die Spannhülse entlang ihrer gesamten axialen Länge sowohl an der Welle als auch am Rotor anliegt, sofern die Spannhülse selbst in zumindest einer zur Rotationsachse senkrechten Schnittebene unter Betriebsbedingungen einen radialen Spalt aufweist.

In einigen Ausführungsformen sind der mindestens eine erste axiale Abschnitt und/oder der mindestens eine zweite Abschnitt im Wesentlichen zylindermantelförmig ausgebildet. In anderen Ausführungsformen sind der mindestens eine erste axiale Abschnitt und/oder der mindestens eine zweite axiale Abschnitt im Wesentlichen kegelmantelförmig ausgebildet.

Zwischen dem mindestens einen ersten axialen Abschnitt und dem mindestens einen zweiten axialen Abschnitt kann ein Verbindungsabschnitt vorgesehen sein, der weder an der Welle noch am Rotor anliegt. Ein solcher Verbindungsabschnitt kann für eine federnde Verbindung zwischen Welle und Rotor sorgen. Auch der Verbindungsabschnitt kann beispielsweise zylindermantelförmig oder kegelmantelförmig ausgebildet sein. In einigen Ausführungsformen kann der Verbindungsabschnitt auch eben ausgebildet sein, insbesondere eben und ringförmig.

In einigen Ausführungsformen können der mindestens eine erste axiale Abschnitt und der mindestens eine erste axiale Abschnitt sowie gegebenenfalls der mindestens eine Verbindungsabschnitt im Wesentlichen die gleiche Dicke aufweisen, was eine einfache Herstellung erlaubt.

In einer ersten besonders bevorzugten Ausführungsform befindet sich ein erster axialer Abschnitt, in dem die Spannhülse nur an der Welle anliegt (nicht aber auch am Rotor), in einem axial mittleren Bereich der Spannhülse. Zwei zweite axiale Abschnitte, in denen die Spannhülse nur am Rotor anliegt (nicht aber auch an der Welle), befinden sich in zwei axialen Endbereichen der Spannhülse. In diesen Endbereichen ist nämlich die Aufweitung des Rotors aufgrund von Fliehkräften und Erwärmung in der Regel geringer als in dem axial dazwischen liegenden Abschnitt. Durch den nur im axial mittleren Bereich bestehenden Kontakt der Spannhülse mit der Welle kann eine Federung der Spannhülse in radialer Richtung gewährleistet werden.

Die Rotationsverbindung kann auch mehr als eine Spannhülse aufweisen. In einer zweiten besonders bevorzugten Ausführungsform weist die Welle einen ersten axialen Abschnitt mit einem ersten Durchmesser und einen zweiten axialen Abschnitt mit einem zweiten, grösseren Durchmesser auf. Eine erste Spannhülse kann dabei in einem axialen Abschnitt nur an der Welle anliegen (nicht aber auch am Rotor) und in einem zweiten axialen Abschnitt nur am Rotor anliegen (nicht aber auch an der Welle). Eine zweite Spannhülse kann in einem ersten axialen Abschnitt nur an der Welle anliegen (nicht aber auch am Rotor) und in einem zweiten axialen Abschnitt nur am Rotor anliegen (nicht aber auch an der Welle). Diese Ausführungsform ermöglicht eine stabilere Anbindung, was zu einer besseren Drehzahleignung führt. Zusätzlich vereinfacht diese Konstruktion auch die Fertigung. Weiterhin werden unterschiedliche Durchmesser erreicht, was zusätzliche geometrische Freiheitsgrade ergibt und auch eine kompaktere Bauweise ermöglicht.

Der erste axiale Abschnitt der ersten Spannhülse, der nur an der Welle anliegt, kann dem zweiten Abschnitt der Welle zugewandt sein, und der zweite axiale Abschnitt der ersten Spannhülse, der nur am Rotor anliegt, kann dem zweiten Abschnitt der Welle abgewandt sein. Umgekehrt ist es auch möglich, dass der erste axiale Abschnitt der ersten Spannhülse, der nur an der Welle anliegt, dem zweiten Abschnitt der Welle abgewandt ist, und der zweite axiale Abschnitt der ersten Spannhülse, der nur am Rotor anliegt, dem zweiten Abschnitt der Welle zugewandt ist.

Unabhängig davon kann der erste axiale Abschnitt der zweiten Spannhülse, der nur an der Welle anliegt, dem ersten Abschnitt der Welle zugewandt sein, und der zweite axiale Abschnitt der zweiten Spannhülse, der nur am Rotor anliegt, kann dem ersten Abschnitt der Welle abgewandt sein; oder der erste axiale Abschnitt der zweiten Spannhülse, der nur an der Welle anliegt, kann dem ersten Abschnitt der Welle abgewandt sein, und der zweite axiale Abschnitt der zweiten Spannhülse, der nur am Rotor anliegt, kann dem ersten Abschnitt der Welle zugewandt sein.

Bildet einer der genannten ersten und zweiten axialen Bereiche einen axialen Endbereich der Spannhülse, so kann dieser Bereich das Verrutschen der Spannhülse in nur einer axialen Richtung verhindern. Bildet einer der genannten ersten und zweiten axialen Bereiche hingegen einen axial mittleren Bereich der Spannhülse, so kann in diesem Bereich eine weiter unten noch im Detail beschriebene Einkerbung gebildet sein.

Wie oben bereits erwähnt wurde, können die Welle und der Rotor aus verschiedenen Materialien bestehen. Insbesondere können sie verschiedene Elastizitätsmodule und/oder verschiedene Wärmeausdehnungskoeffizienten und/oder verschiedene spezifische Wärmeleitfähigkeiten und/oder verschiedene Dichten und/oder verschiedene Festigkeiten, insbesondere verschiedene Zugfestigkeiten und/oder verschiedene Streckgrenzen, und/oder verschiedene elektrische Leitfähigkeiten und/oder verschiedene Magnetisierbarkeiten besitzen. Verschiedene Elastizitätsmodule und/oder Dichten können unter dem Einfluss von Fliehkräften ohne erfindungsgemässe Spannhülse zu einem Abheben führen. Mit der erfindungsgemässen Spannhülse kann dies jedoch vermieden werden. Wenn die Welle und der Rotor verschiedene Wärmeausdehnungskoeffizienten aufweisen, ist es vorteilhaft, wenn die Spannhülse einen Wärmeausdehnungskoeffizienten aufweist, der zwischen denen der Welle und des Rotors liegt, da hierdurch ein vorteilhafter Ausgleich zwischen den Wärmeausdehnungen der Welle und des Rotors erreicht werden kann. Unterschiedliche spezifische Wärmeleitfähigkeiten können zum Beispiel vorteilhaft sein, um eine heisse Turbine thermisch zu isolieren. Umgekehrt können verschiedene spezifische Wärmeleitfähigkeiten für eine optimierte Wärmeableitung sorgen. Insgesamt können aufgrund der erfindungsgemässen Spannhülse also sehr unterschiedliche Werkstoffe für Welle und Rotor zum Einsatz kommen, die die genannten Vorteile bewirken können.

Natürlich ist es auch denkbar und liegt im Rahmen der Erfindung, dass die Welle und der Rotor aus dem gleichen Material bestehen. Dabei ist es denkbar und liegt im Rahmen der Erfindung, dass die Welle und der Rotor aus an sich gleichen Materialien mit verschiedenen Eigenschaften bestehen. An sich gleiche Materialien mit verschiedenen Eigenschaften können beispielsweise durch verschiedene Arten der Herstellung und/oder Bearbeitung erhalten werden, etwa durch Weichglühen, Schäumen und/oder Lasersintern.

Beispielsweise kann die Welle eine Keramik enthalten oder daraus bestehen, und der Rotor kann Aluminium, eine Aluminiumlegierung, Titan, eine Titanlegierung oder Chromstahl enthalten oder daraus bestehen. Dabei kann die Aluminiumlegierung oder die Titanlegierung eine pulvermetallurgische und/oder eine sintermetallische Verbindung sein. Insbesondere wenn der Rotor ein Turbinenrad ist, kann auch er eine Keramik enthalten oder daraus bestehen.

Alternativ kann die Welle beispielsweise ein Hartmetall, einen Kunststoff, Stahl oder Titan enthalten oder daraus bestehen, und der Rotor kann einen Kunststoff enthalten oder daraus bestehen, wie beispielsweise Polyimid (wie etwa Torlon^{®}) oder PEEK (Polyetheretherketon). Optional kann der Kunststoff auch faserverstärkt sein.

Weiterhin ist es auch möglich, dass die Welle eine Keramik enthält oder daraus besteht und der Rotor einen Kunststoff enthält oder daraus besteht. Ausserdem ist es möglich, dass die Welle ein Hartmetall enthält oder daraus besteht und der Rotor Aluminium enthält oder daraus besteht.

Die Welle, die Spannhülse und der Rotor können auf vielfältige Weise miteinander verbunden sein, nämlich beispielsweise durch eine Schrumpfverbindung und/oder durch eine Pressverbindung und/oder durch eine Klebeverbindung und/oder durch eine Lötverbindung und/oder durch eine Schweissverbindung und/oder durch eine Rändelverbindung und/oder durch eine Klemmverbindung und/oder durch eine Kristallisationsverbindung und/oder durch eine Polygonverbindung und/oder durch hydraulisches Aufpressen und/oder durch eine Kunststoffgussverbindung und/oder durch eine Lasersinterverbindung. Bevorzugt sind die Welle, die Spannhülse und der Rotor ausschliesslich durch eine dieser Verbindungen oder eine beliebige Kombination dieser Verbindungen miteinander verbunden.

Die Schrumpfverbindung kann dabei mit oder ohne thermischen Einfluss hergestellt sein. Eine Schrumpf- oder Pressverbindung erlaubt eine sehr gut reproduzierbare Vorspannung zwischen Welle und Rotor, da die Teile geometrisch genau gefertigt werden können. Im Gegensatz dazu haben beispielsweise bei Schraubverbindungen die Reibkoeffizienten einen grösseren Einfluss.

Mit besonderem Vorteil ist die Spannhülse derart ausgebildet und zwischen der Welle und dem Rotor eingespannt, dass zwischen der Welle und dem Rotor eine Koaxialität von weniger als 50 µm, bevorzugt weniger als 10 µm, besonders bevorzugt weniger als 2 µm vorliegt. Die Koaxialität wird hier und im Folgenden im Sinne von Abschnitt 18.13.2 der Norm ISO 1101:2012(E) verstanden. Derart geringe Koaxialitäten, die vor allem bei hohen Drehzahlen von besonderer Relevanz sind, können mit den erfindungsgemässen Spannhülsen erreicht werden.

Der Rotor der erfindungsgemässen Rotationsverbindung kann als Verdichterrad ausgebildet sein, insbesondere als Radialverdichterrad. Alternativ kann er als Turbinenrad, insbesondere als Radialturbinenrad ausgebildet sein. Weiterhin kann er als Rotor einer elektrischen Maschine, insbesondere eines Motors oder eines Generators, als Rotor eines Kupplungssystems, insbesondere einer Magnetkupplung, oder als Schwungrad, insbesondere eines kinetischen Speichers, ausgebildet sein.

In einigen Ausführungsformen kann die Spannhülse mindestens eine insbesondere radial oder axial verlaufende Einkerbung zur Positionierung der Spannhülse zwischen dem Rotor und der Welle aufweisen. Insbesondere kann eine solche Einkerbung zur Positionierung in axialer Richtung vorteilhaft sein und/oder ein Verdrehen um die Rotationsachse herum verhindern. Die Einkerbung kann an einer Innenseite oder an einer Aussenseite der Spannhülse angeordnet sein. Natürlich ist es auch denkbar, dass die Spannhülse sowohl an ihrer Innenseite als auch ihrer Aussenseite jeweils mindestens eine Einkerbung aufweist. Durch irreversible plastische Deformation des Materials der Welle und/oder des Rotors kann dieses Material in die Einkerbung eindringen und somit für die genannte Positionierung sorgen. Alternativ oder zusätzlich kann auch die Welle an ihrer Aussenseite und/oder kann der Rotor an seiner Innenseite mindestens eine insbesondere radial oder axial verlaufende Einkerbung zur Positionierung der Spannhülse zwischen dem Rotor und der Welle aufweisen. Die genannten Einkerbungen können optional mit einem Klebstoff versehen werden, um ein axiales oder radiales Verrutschen zu verhindern. Insbesondere wenn der Rotor der Rotor einer elektrischen Maschine ist, kann es vorteilhaft sein, wenn dieser Rotor als Magnet, insbesondere als Rundmagnet ausgeführt ist.

Die Spannhülse sollte bevorzugt eine gewisse Elastizität aufweisen, um die oben erläuterten vorteilhaften Effekte besonders gut bewirken zu können. Beispielsweise kann sie Stahl (insbesondere 100Cr6, INCONEL® oder Chromstahl), Titan, eine Titanlegierung, Aluminium, eine Aluminiumlegierung oder einen Kunststoff (insbesondere einen faserverstärkte Kunststoff) enthalten oder daraus bestehen. Sie kann beispielsweise durch Drehen, Pressen, Tiefziehen, Schleifen, Giessen, Lasersintern, Schweissen, Beschichten oder Stanzen oder beliebige Kombinationen davon hergestellt werden. Eine Spannhülse aus Kunststoff kann beispielsweis durch Spritzgiessen hergestellt werden.

Ein weiterer Aspekt der Erfindung betrifft eine Spannhülse für eine wie oben beschriebene Rotationsverbindung an sich. Diese Spannhülse dient also zum Einspannen zwischen einer Welle und einem Rotor und zum Übertragen von Drehmomenten zwischen der Welle und dem Rotor, insbesondere von der Welle auf den Rotor. Erfindungsgemäss lässt die Spannhülse bei Rotation in zumindest einem Drehzahlbereich in wenigstens einer, bevorzugt in jeder zu einer Rotationsachse der Welle und des Rotors senkrechten Schnittebene einen radialen Spalt zwischen Welle und Rotor frei.

Wie oben bereits erläutert wurde, ist es von Vorteil, wenn die Spannhülse mindestens eine insbesondere radial oder axial verlaufende Einkerbung zur Positionierung der Spannhülse zwischen dem Rotor und der Welle aufweist. Die Einkerbung kann an einer Innenseite oder an einer Aussenseite der Spannhülse angeordnet sein. Natürlich ist es auch denkbar, dass die Spannhülse sowohl an ihrer Innenseite als auch ihrer Aussenseite jeweils mindestens eine Einkerbung aufweist.

Noch ein weiterer Aspekt der Erfindung betrifft ein Verfahren zum Herstellen einer wie oben beschriebenen Rotationsverbindung. Dieses Verfahren enthält einen Schritt, in dem eine Spannhülse, insbesondere eine wie oben beschriebene Spannhülse, derart in radialer Richtung zwischen der Welle und dem Rotor eingespannt wird, dass Drehmomente zwischen der Welle und dem Rotor übertragbar sind, insbesondere von der Welle auf den Rotor. Das Einspannen erfolgt dabei durch eine Schrumpfverbindung und/oder eine Pressverbindung und/oder durch eine Klebeverbindung und/oder durch eine Lötverbindung und/oder durch eine Schweissverbindung und/oder durch eine Rändelverbindung und/oder durch hydraulisches Aufpressen, bevorzugt durch eine Schrumpfverbindung und/oder durch eine Pressverbindung. Wie oben bereits erläutert wurde, erlaubt eine Schrumpf- oder Pressverbindung eine sehr gut reproduzierbare Vorspannung zwischen Welle und Rotor, da die Teile geometrisch genau gefertigt werden können.

Im Folgenden wird die Erfindung anhand mehrerer Ausführungsbeispiele erläutert. Dabei zeigen
- Figur 1a:: ein erstes Ausführungsbeispiel einer erfindungsgemässen Rotationsverbindung in einer seitlichen Schnittansicht;
- Figur 1b:: eine Prinzipskizze des ersten Ausführungsbeispiels;
- Figur 1c:: eine Prinzipskizze einer Variante des ersten Ausführungsbeispiels;
- Figur 2:: eine Prinzipskizze eines zweiten Ausführungsbeispiels einer erfindungsgemässen Rotationsverbindung in einer seitlichen Schnittansicht;
- Figur 3:: eine Prinzipskizze eines dritten Ausführungsbeispiels einer erfindungsgemässen Rotationsverbindung in einer seitlichen Schnittansicht;
- Figur 4:: eine Prinzipskizze eines vierten Ausführungsbeispiels einer erfindungsgemässen Rotationsverbindung in einer seitlichen Schnittansicht;
- Figur 5:: eine Prinzipskizze eines fünften Ausführungsbeispiels einer erfindungsgemässen Rotationsverbindung in einer seitlichen Schnittansicht;
- Figur 6:: eine Prinzipskizze eines sechsten Ausführungsbeispiels einer erfindungsgemässen Rotationsverbindung in einer seitlichen Schnittansicht;
- Figur 7:: eine Prinzipskizze eines siebten Ausführungsbeispiels einer erfindungsgemässen Rotationsverbindung in einer seitlichen Schnittansicht;
- Figur 8:: eine Prinzipskizze eines achten Ausführungsbeispiels einer erfindungsgemässen Rotationsverbindung in einer seitlichen Schnittansicht;
- Figur 9:: eine Prinzipskizze eines neunten Ausführungsbeispiels einer erfindungsgemässen Rotationsverbindung in einer seitlichen Schnittansicht;
- Figur 10:: eine Prinzipskizze eines zehnten Ausführungsbeispiels einer erfindungsgemässen Rotationsverbindung in einer seitlichen Schnittansicht.

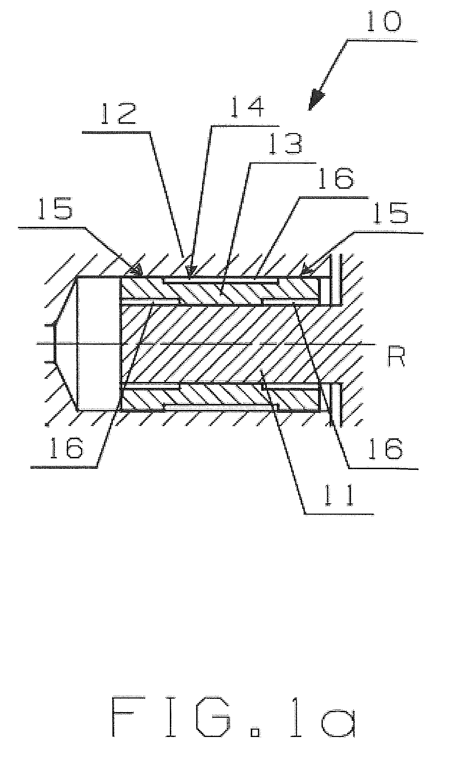

Die in Figur 1a dargestellte Rotationsverbindung 10 enthält eine Welle 11 und einen Rotor 12, der als Verdichterrad 12 eines Verdichters ausgebildet ist. In radialer Richtung zwischen der Welle 11 und dem Rotor 12 ist eine Spannhülse 13 eingespannt, mit der Drehmomente von der Welle 11 auf den Rotor 12 übertragbar sind, so dass beide um eine gemeinsame Rotationsachse R rotierbar sind. Die Welle 11 kann beispielsweise aus einer Keramik bestehen und der Rotor 12 aus Aluminium. Die Spannhülse 13 kann beispielsweise aus Stahl bestehen, besonders bevorzugt aus Chromstahl 1.4313, welcher einen Wärmeausdehnungskoeffizienten aufweist, der zwischen denen der Welle 11 und des Rotors 12 liegt. Hierdurch kann ein vorteilhafter Ausgleich zwischen den Wärmeausdehnungen der Welle 11 und des Rotors 12 erreicht werden.

Die Spannhülse 13 enthält in einem axial mittleren Bereich einen ersten axialen Abschnitt 14, in dem sie nur an der Welle 11 anliegt, nicht aber auch am Rotor 12. In zwei axialen Endbereichen verfügt die Spannhülse 13 über zwei zweite axiale Abschnitte 15, in denen die Spannhülse 13 nur am Rotor 12 anliegt, nicht aber auch an der Welle 11. Hierdurch ist im ersten axialen Abschnitt 14 ein radialer Spalt 16 zwischen der Spannhülse 13 und dem Rotor 12 gebildet, und in den beiden zweiten axialen Abschnitten 15 ist ein radialer Spalt 16 zwischen der Spannhülse 13 und der Welle 11 gebildet. Insgesamt lässt somit die Spannhülse 13 in jeder zur Rotationsachse R senkrechten Schnittebene einen radialen Spalt 16 zwischen Welle 11 und Rotor 12 frei. In einigen Ausführungsformen wird ein solcher radialer Spalt 16 nur in einem bestimmten Drehzahlbereich freigelassen, nicht aber unbedingt auch beim Stillstand. Dieser Drehzahlbereich kann beispielsweise ein Bereich von 10'000 U/min bis 1'000'000 U/min, bevorzugt von 50'000 U/min bis 600'000 U/min, besonders bevorzugt von 80'000 U/min bis 400'000 U/min sein. Die beiden Spalte 16 bilden axiale Endbereiche der Spannhülse 13, so dass durch jeden dieser Spalte 16 ein Verrutschen der Spannhülse 13 in den beiden entgegengesetzten axialen Richtungen verhindert werden kann.

Die Welle 11, die Spannhülse 13 und der Rotor 12 können durch eine Schrumpfverbindung miteinander verbunden sein. Dies erlaubt eine sehr gut reproduzierbare Vorspannung zwischen Welle 11 und Rotor 12, da die Teile geometrisch genau gefertigt werden können. Die Spannhülse 13 kann beispielsweise durch Drehen, Pressen, Tiefziehen, Schleifen, Giessen, Lasersintern, Schweissen, Beschichten oder Stanzen oder beliebige Kombinationen davon hergestellt werden.

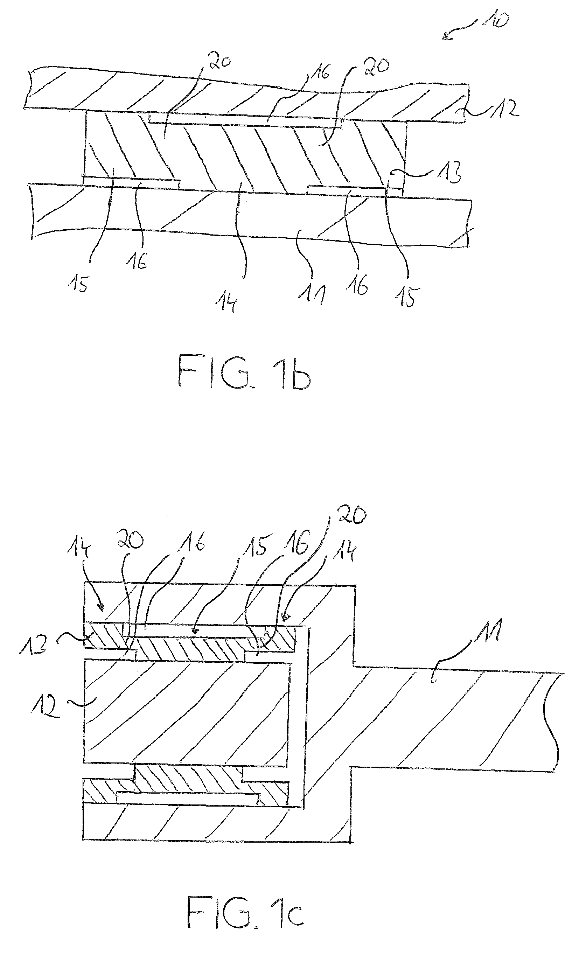

Figur 1b zeigt eine Prinzipskizze der Ausführungsform aus Figur 1a, in der die Spannhülse 13 jedoch nicht massstabsgetreu abgebildet ist, um die radialen Spalte 16 besser darstellen zu können. Zwischen dem ersten axialen Abschnitt 14 und jedem der beiden zweiten axialen Abschnitte 15 ist jeweils ein Verbindungsabschnitt 20 ausgebildet, der weder an der Welle 11 noch am Rotor 12 anliegt. Der erste axiale Abschnitt 14, die beiden zweiten axialen Abschnitte 15 und auch der Verbindungsabschnitt 20 sind allesamt zylindermantelförmig ausgebildet. Der Verbindungsabschnitt 20 sorgt für eine federnde Verbindung zwischen der Welle 11 und dem Rotor 12.

Die Spannhülse 13 kann das Abheben selbst unter vergleichsweise hohen Drehzahl- und Temperaturbeanspruchungen wirkungsvoll verhindern, so dass auch unter diesen Bedingungen zuverlässig Drehmomente von der Welle 11 auf den Rotor 12 übertragen werden können. Auf der in radialer Richtung elastischen Ausbildung kann sich die Spannhülse 13 nämlich verformen, wobei sich die Breite des zwischen Welle 11 und Rotor 12 gebildeten radialen Spaltes 16 in Abhängigkeit von Temperatur und Fliehkraft ändern kann. Somit können Verformungen von Welle 11 und/oder Rotor 12 kompensiert werden, und die Radialkräfte zwischen Welle 11 und Rotor 12 sind ausreichend, um Drehmomente von der Welle 11 auf den Rotor 12 zu übertragen. Dies ermöglicht die obigen speziellen Kombinationen von Materialien der Welle 11 und des Rotors 12.

In der in Figur 1c dargestellten Variante ist die Spannhülse 13 identisch zur Spannhülse gemäss Figuren 1a und 1b aufgebaut. Im Bereich der Spannhülse 13 ist hier jedoch die Welle 11 ausserhalb des Rotors 12 angeordnet. Zwei in axialen Endbereichen der Spannhülse 13 angeordnete erste axiale Abschnitte 14 der Spannhülse 13 liegen nur an der Welle 11 an, nicht aber auch am Rotor 12, und im axial mittleren Bereich der Spannhülse 13 liegt ein zweiter axialer Abschnitt 15 nur am Rotor 12 an, nicht aber auch an der Welle 11. Der Rotor 12 enthält in dieser Variante einen Rundmagneten.

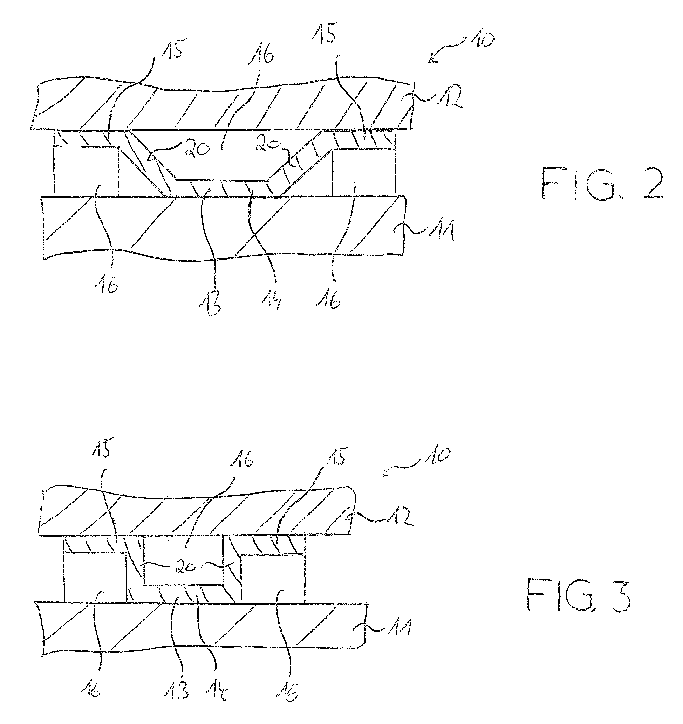

In der Ausführungsform gemäss Figur 2 liegt ebenfalls im axial mittleren Bereich der Spannhülse 13 ein erster axialer Abschnitt 14 der Spannhülse 13 nur an der Welle 11 an, nicht aber auch am Rotor 12, und zwei in axialen Endbereichen der Spannhülse 13 angeordnete zweite axiale Abschnitte 15 liegen nur am Rotor 12 an, nicht aber auch an der Welle 11. Auch hier sind Verbindungsabschnitte 20 zwischen dem ersten axialen Abschnitt 14 und den zweiten axialen Abschnitten 15 gebildet. Im Gegensatz zur Ausführungsform gemäss den Figuren 1a und 1b weisen hier jedoch der erste axiale Abschnitt 14, die beiden zweiten axialen Abschnitte 15 und auch der Verbindungsabschnitt 20 die gleiche Dicke auf. Es sind auch Ausführungsformen mit unterschiedlichen Dicken möglich. Ebenfalls im Unterschied zu den Figuren 1a und 1b ist der Verbindungsabschnitt 20 hier kegelmantelförmig ausgebildet. Hierdurch kann eine höhere radiale Elastizität erreichen werden. Die hier dargestellte Spannhülse 13 kann beispielsweise aus einem Metallblech hergestellt werden.

Die Spannhülse 13 gemäss Figur 3 weist in einem axial mittleren Bereich einen zylindermantelförmigen ersten axialen Abschnitt 14 auf, der nur an der Welle 11 anliegt, nicht aber auch am Rotor 12. Ferner weist sie zwei in axialen Endbereichen angeordnete, ebenfalls zylindermantelförmige zweite axiale Abschnitte 15 auf, die nur am Rotor 12 anliegen, nicht aber auch an der Welle 11. Zwischen dem ersten axialen Abschnitt 14 und jedem der beiden zweiten axialen Abschnitte 15 erstreckt sich jeweils ein Verbindungsabschnitt 20, die beide eben und ringförmig ausgebildet sind. Diese Spannhülse 13 hat fertigungstechnische Vorteile. Zudem ist eine wirkungsvolle Federung ausserhalb der ringförmigen Verbindungsabschnitte 20 immer noch gewährleistet.

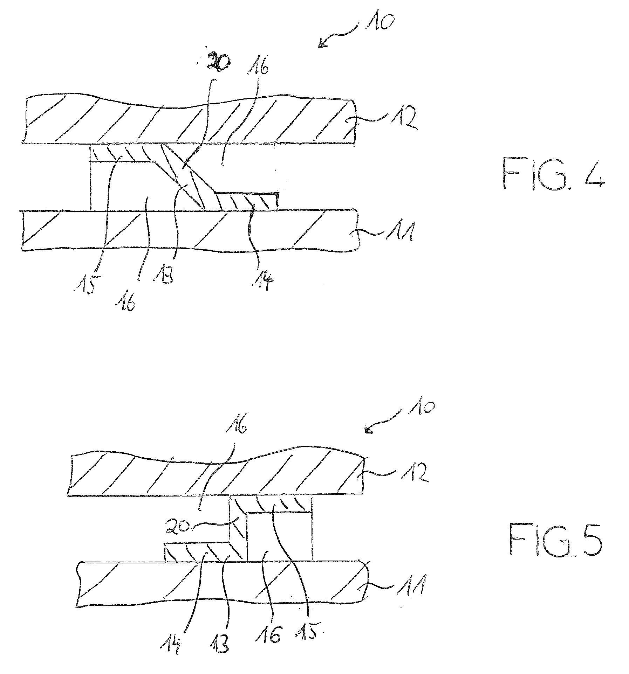

Die in Figur 4 dargestellte Spannhülse 13 enthält ebenfalls einen ersten axialen Abschnitt 14, der hier jedoch in einem ersten axialen Endbereich der Spannhülse 13 angeordnet ist. Hier liegt die Spannhülse 13 an der Welle 11 an, nicht aber auch am Rotor 12. Im Gegensatz zur Spannhülse 13 gemäss Figur 2 enthält sie nur einen einzigen zweiten axialen Abschnitt 15, der in einem dem ersten Endbereich gegenüberliegenden zweiten Endbereich angeordnet ist. Hier liegt die Spannhülse 13 am Rotor 12 an, nicht aber auch an der Welle 11. Diese Ausführungsform ist baulich einfacher als die gemäss Figur 2. Der erste axiale Abschnitt 14 und der zweite axiale Abschnitt 15 sind zylindermantelförmig ausgebildet und ein dazwischen angeordneter Verbindungsabschnitt kegelmantelförmig.

Die Spannhülse 13 gemäss Figur 5 enthält ebenfalls einen ersten axialen Abschnitt 14, der in einem ersten Endbereich angeordnet ist, und einen einzigen zweiten axialen Abschnitt 15, der in einem zweiten Endbereich angeordnet ist. Sowohl der erste axiale Abschnitt 14 als auch der zweite axiale Abschnitt 15 sind zylindermantelförmig ausgebildet. Dazwischen erstreckt sich ein ebener, ringförmiger Verbindungsabschnitt 20.

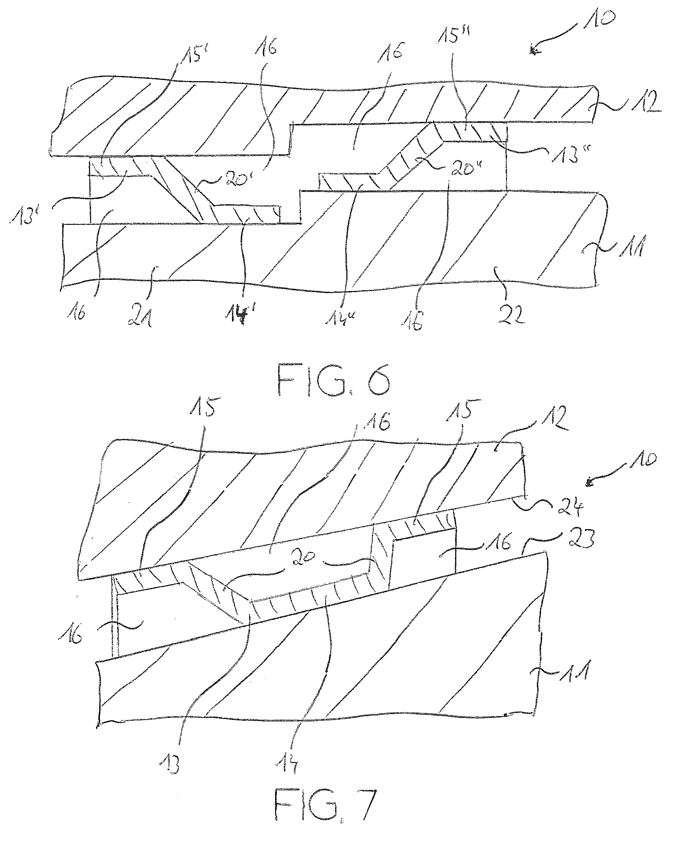

In der in Figur 6 gezeigten Rotationsverbindung 10 weist die Welle 11 einen ersten axialen Abschnitt 21 mit einem ersten Durchmesser und einen zweiten axialen Abschnitt 22 mit einem zweiten, grösseren Durchmesser auf. Die Rotationsverbindung 10 enthält eine erste Spannhülse 13' und eine zweite Spannhülse 13", die beide wie die in Figur 4 dargestellte Spannhülse 13 aufgebaut sind. Die erste Spannhülse 13' liegt in einem ersten axialen Abschnitt 14', der dem zweiten Abschnitt 22 der Welle 11 zugewandt ist, nur an der Welle 11 an. In einem zweiten axialen Abschnitt 15', der dem zweiten Abschnitt 22 der Welle 11 abgewandt ist, liegt die Spannhülse 13' nur am Rotor 12 an. Analog liegt die zweite Spannhülse 13" in einem ersten axialen Abschnitt 14", der dem ersten Abschnitt 21 der Welle 11 zugewandt ist, nur an der Welle 11 an. In einem zweiten axialen Abschnitt 15", der dem ersten Abschnitt 21 der Welle 11 abgewandt ist, liegt die Spannhülse 13" nur am Rotor 12 an. Diese Ausführungsform ermöglicht eine stabilere Anbindung, was zu einer besseren Drehzahleignung führt. Zusätzlich vereinfacht diese Konstruktion auch die Fertigung. Zudem werden zwei unterschiedliche Durchmesser erreicht, was zusätzliche geometrische Freiheitsgrade ergibt und auch eine kompaktere Bauweise ermöglicht.

Bei der in Figur 7 dargestellten Ausführungsform sind sowohl der im axial mittleren Bereich angeordnete erste axiale Abschnitt 14 als auch die beiden zweiten axialen Abschnitte 15 in den axialen Endbereichen kegelmantelförmig ausgebildet. Auch die sich dazwischen erstreckenden Verbindungsabschnitte 20 sind kegelmantelförmig. Entsprechend sind auch die äussere Oberfläche 23 der Welle 11 und die innere Oberfläche 24 des Rotors 12 kegelmantelförmig ausgebildet. Im Unterschied zu den oben beschriebenen zylindrischen Ausführungsformen weisen die kegelförmigen Ausführungen Vorteile in der Herstellung und Montage auf. Durch die Kegelform können Toleranzfelder erweitert werden, was Kosten sparen kann.

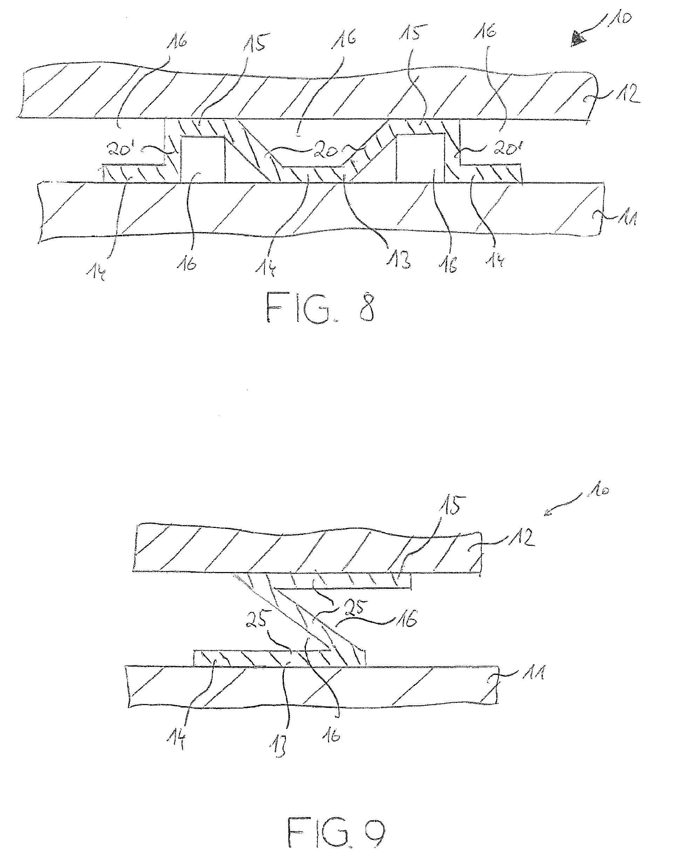

In Figur 8 enthält die Spannhülse 13 insgesamt drei erste axiale Abschnitte 14: einen in einem axial mittleren Bereich der Spannhülse 13 und jeweils einen in einem der beiden axialen Endbereiche. Hier liegt die Spannhülse 13 an der Welle 11 an, nicht aber auch am Rotor 12. Zwischen benachbarten ersten axialen Abschnitten 14 ist jeweils ein zweiter Abschnitt 15 gebildet, der nur am Rotor 12 anliegt, nicht aber auch an der Welle 11. Zwischen dem im axial mittleren Bereich angeordneten ersten axialen Abschnitt 14 und den zweiten axialen Abschnitten 15 sind kegelmantelförmige Verbindungsabschnitte 20 gebildet. Zwischen den zweiten axialen Abschnitten 15 und den beiden ersten axialen Abschnitten 14 in den axialen Endbereichen sind ebene, ringförmige Verbindungsabschnitte 20' gebildet. In dieser Ausführungsform kann der Rotor 12 aufgrund einer breiten und stabilen axialen Abstützung besser gegen ein Verkippen abgestützt werden.

Schliesslich zeigt die Figur 9 eine Z-förmige Spannhülse 13. Diese enthält einen ersten axialen Abschnitt 14, der nur an der Welle 11 anliegt (nicht aber auch am Rotor 12), sowie einen zweiten axialen Abschnitt 15, der nur am Rotor 12 anliegt (nicht aber auch an der Welle 11). Auch bei dieser Ausführungsform ist in jeder zur Rotationsachse R senkrechten Schnittebene ein Spalt 16 zwischen Welle 11 und Rotor 12 freigelassen. Im axial mittleren Bereich der Spannhülse 13 sind zwischen verschiedenen radialen Abschnitten 25 der Spannhülse 13 ebenfalls Spalte 16 gebildet. Hier enthält also die Spannhülse 13 selbst die erfindungsgemässen radialen Spalte.

Die erfindungsgemässen Spannhülsen 13, 13', 13" erlauben es, dass zwischen der Welle 11 und dem Rotor 12 eine Koaxialität von weniger als 50 µm, weniger als 10 µm oder sogar weniger als 2 µm erreicht werden kann.

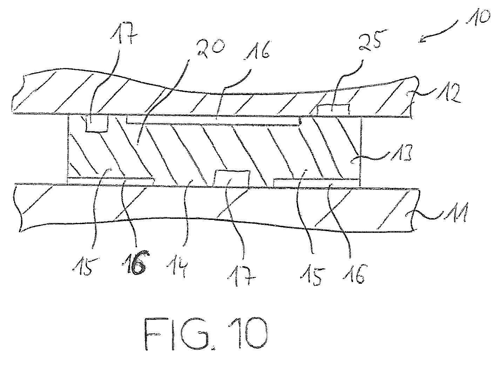

Das in Figur 10 dargestellte zehnte Ausführungsbeispiel ist ähnlich zu dem in den Figuren 1a und 1b dargestellten ersten Ausführungsbeispiel. Im Gegensatz dazu enthält die Spannhülse 13 hier jedoch im ersten axialen Abschnitt 14 an ihrer der Welle 11 zugewandten Innenseite eine radial verlaufende Einkerbung 17. Im links dargestellten zweiten axialen Abschnitt 15 enthält sie an ihrer dem Rotor 12 zugewandten Aussenseite eine ebenfalls radial verlaufende Einkerbung 17. Auch der Rotor 12 verfügt über eine radial verlaufende Einkerbung 25, die sich an seiner dem rechts dargestellten zweiten axialen Abschnitt 15 der Spannhülse 13 zugewandten Innenseite befindet. Durch irreversible plastische Deformation des Materials der Welle 11 und des Rotors 12 kann dieses Material in die Einkerbung eindringen und somit für die genannte Positionierung sorgen. Ein axiales und radiales Verrutschen kann durch einen Klebstoff weiter verhindert werden, der in die Einkerbungen 17, 25 eingebracht werden kann.

## Patentansprüche

1. Rotationsverbindung (10) zwischen miteinander rotierbaren Teilen (11, 12), enthaltend
- eine Welle (11),
- einen Rotor (12),
- mindestens eine in radialer Richtung zwischen der Welle (11) und dem Rotor (12) eingespannte Spannhülse (13; 13'; 13") zum Übertragen von Drehmomenten zwischen der Welle (11) und dem Rotor (12), insbesondere von der Welle (11) auf den Rotor (12),
**dadurch gekennzeichnet, dass**
die Spannhülse (13; 13'; 13") bei Rotation in zumindest einem Drehzahlbereich in wenigstens einer, bevorzugt in jeder zu einer Rotationsachse (R) der Welle (11) und des Rotors (12) senkrechten Schnittebene einen radialen Spalt (16) zwischen Welle (11) und Rotor (12) freilässt.

2. Rotationsverbindung (10) gemäss Anspruch 1,
**dadurch gekennzeichnet, dass**
die Spannhülse (13; 13'; 13") mindestens einen ersten axialen Abschnitt (14) und mindestens einen zweiten axialen Abschnitt (15) aufweist, wobei sie im ersten axialen Abschnitt (14) nur an der Welle (11) anliegt und im zweiten axialen Abschnitt (15) nur am Rotor (12) anliegt.

3. Rotationsverbindung (10) gemäss Anspruch 2,
**dadurch gekennzeichnet, dass**
sich ein erster axialer Abschnitt (14), in dem die Spannhülse (13; 13'; 13") nur an der Welle (11) anliegt, in einem axial mittleren Bereich der Spannhülse (13; 13'; 13") befindet, und sich zwei zweite axiale Abschnitte (15), in denen die Spannhülse (13; 13'; 13") nur am Rotor (12) anliegt, in zwei axialen Endbereichen der Spannhülse (13; 13'; 13") befinden.

4. Rotationsverbindung (10) gemäss Anspruch 2,
**dadurch gekennzeichnet, dass**
- die Welle (11) einen ersten axialen Abschnitt (21) mit einem ersten Durchmesser und einen zweiten axialen Abschnitt (22) mit einem zweiten, grösseren Durchmesser aufweist,
- eine erste Spannhülse (13') in einem ersten axialen Abschnitt (14') nur an der Welle (11) anliegt und in einem zweiten axialen Abschnitt (15') nur am Rotor (12) anliegt,
- eine zweite Spannhülse (13") in einem ersten axialen Abschnitt (14") nur an der Welle (11) anliegt und in einem zweiten axialen Abschnitt (15") nur am Rotor (12) anliegt.

5. Rotationsverbindung (10) gemäss einem der vorangehenden Ansprüche,
**dadurch gekennzeichnet, dass**
die Welle (11) und der Rotor (12) aus verschiedenen Materialien bestehen und insbesondere verschiedene Elastizitätsmodule und/oder verschiedene Wärmeausdehnungskoeffizienten und/oder verschiedene spezifische Wärmeleitfähigkeiten und/oder verschiedene Dichten und/oder verschiedene Festigkeiten, insbesondere verschiedene Zugfestigkeiten und/oder verschiedene Streckgrenzen, und/oder verschiedene elektrische Leitfähigkeiten und/oder verschiedene Magnetisierbarkeiten besitzen.

6. Rotationsverbindung (10) gemäss einem der vorangehenden Ansprüche,
**dadurch gekennzeichnet, dass**
die Welle (11) eine Keramik enthält oder daraus besteht und der Rotor (12) Aluminium, eine Aluminiumlegierung, Titan, eine Titanlegierung oder Chromstahl enthält oder daraus besteht.

7. Rotationsverbindung (10) gemäss einem der vorangehenden Ansprüche,
**dadurch gekennzeichnet, dass**
die Welle (11) ein Hartmetall, einen Kunststoff, Stahl oder Titan enthält oder daraus besteht und der Rotor (12) einen Kunststoff enthält oder daraus besteht, wie beispielsweise Polyimid oder PEEK.

8. Rotationsverbindung (10) gemäss einem der vorangehenden Ansprüche,
**dadurch gekennzeichnet, dass**
die Welle (11), die Spannhülse (13; 13'; 13") und der Rotor (12) durch eine Schrumpfverbindung und/oder durch eine Pressverbindung und/oder durch eine Klebeverbindung und/oder durch eine Lötverbindung und/oder durch eine Schweissverbindung und/oder durch eine Rändelverbindung und/oder durch eine Klemmverbindung und/oder durch eine Kristallisationsverbindung und/oder durch eine Polygonverbindung und/oder durch hydraulisches Aufpressen und/oder durch eine Kunststoffgussverbindung und/oder durch eine Lasersinterverbindung miteinander verbunden sind, bevorzugt ausschliesslich durch eine dieser Verbindungen oder eine beliebige Kombination dieser Verbindungen.

9. Rotationsverbindung (10) gemäss einem der vorangehenden Ansprüche,
**dadurch gekennzeichnet, dass**
die Spannhülse (13; 13'; 13") derart ausgebildet und zwischen der Welle (11) und dem Rotor (12) eingespannt ist, dass zwischen der Welle (11) und dem Rotor (12) eine Koaxialität von weniger als 50 µm, bevorzugt weniger als 10 µm, besonders bevorzugt weniger als 2 µm vorliegt.

10. Rotationsverbindung (10) gemäss einem der vorangehenden Ansprüche,
**dadurch gekennzeichnet, dass**
der Rotor (12) als Verdichterrad, insbesondere als Radialverdichterrad, als Turbinenrad, insbesondere als Radialturbinenrad, als Rotor einer elektrischen Maschine, insbesondere eines Motors oder eines Generators, als Rotor eines Kupplungssystems, insbesondere einer Magnetkupplung, oder als Schwungrad, insbesondere eines kinetischen Speichers, ausgebildet ist.

11. Rotationsverbindung (10) gemäss einem der vorangehenden Ansprüche,
**dadurch gekennzeichnet, dass**
die Spannhülse (13) und/oder die Welle (11) und/oder der Rotor (12) mindestens eine insbesondere radial oder axial verlaufende Einkerbung (17, 25) zur Positionierung der Spannhülse (13) zwischen dem Rotor (12) und der Welle (11) aufweist.

12. Rotationsverbindung (10) gemäss einem der vorangehenden Ansprüche,
**dadurch gekennzeichnet, dass**
der Rotor (12) als Magnet, insbesondere als Rundmagnet, ausgeführt ist, wobei vorzugsweise der Rotor (12) innerhalb der Welle (11) angeordnet ist.

13. Spannhülse (13; 13'; 13") für eine Rotationsverbindung (10) gemäss einem der vorangehenden Ansprüche, zum Einspannen zwischen einer Welle (11) und einem Rotor (12) und zum Übertragen von Drehmomenten zwischen der Welle (11) und dem Rotor (12), insbesondere von der Welle (11) auf den Rotor (12),
**dadurch gekennzeichnet, dass**
die Spannhülse (13; 13'; 13") bei Rotation in zumindest einem Drehzahlbereich in wenigstens einer, bevorzugt in jeder zu einer Rotationsachse (R) der Welle (11) und des Rotors (12) senkrechten Schnittebene einen radialen Spalt (16) zwischen Welle (11) und Rotor (12) freilässt.

14. Spannhülse (13) gemäss Anspruch 13,
**dadurch gekennzeichnet, dass**
die Spannhülse (13) und/oder die Welle (11) und/oder der Rotor (12) mindestens eine insbesondere radial oder axial verlaufende Einkerbung (17) zur Positionierung der Spannhülse (13) zwischen dem Rotor (12) und der Welle (11) aufweist.

15. Verfahren zum Herstellen einer Rotationsverbindung gemäss einem der Ansprüche 1 bis 12, enthaltend einen Schritt, in dem eine Spannhülse (13; 13'; 13"), insbesondere eine Spannhülse (13; 13'; 13") gemäss einem der Ansprüche 13 und 14, derart durch eine Schrumpfverbindung und/oder durch eine Pressverbindung und/oder durch eine Klebeverbindung und/oder durch eine Lötverbindung und/oder durch eine Schweissverbindung und/oder durch eine Rändelverbindung und/oder durch eine Klemmverbindung und/oder durch eine Kristallisationsverbindung und/oder durch eine Polygonverbindung und/oder durch hydraulisches Aufpressen durch eine Kunststoffgussverbindung und/oder durch eine Lasersinterverbindung, bevorzugt ausschliesslich durch eine dieser Verbindungen oder eine beliebige Kombination dieser Verbindungen, in radialer Richtung zwischen der Welle (11) und dem Rotor (12) eingespannt wird, dass Drehmomente zwischen der Welle (11) und dem Rotor (12) übertragbar sind, insbesondere von der Welle (11) auf den Rotor (12).
